# EUROPEAN PATENT APPLICATION

(11) **EP 2 858 386 A2**
(43) Date of publication of application: **08.04.2015**
(21) Application number: 14176183.3
(22) Date of filing: 08.07.2014
(51) Int. Cl.: H04W 4/06, H04W 72/00, H04W 88/02

(54) **System for broadcasting data transmission on LTE D2D communications**

(30) Priority: 09.07.2013 KR 20130080393; 09.07.2013 KR 20130080394; 12.08.2013 KR 20130095162; 12.08.2013 KR 20130095163; 12.08.2013 KR 20130095164; 18.11.2013 KR 20130139942; 23.01.2014 KR 20140008371; 27.03.2014 KR 20140036291; 27.03.2014 KR 20140036294; 27.03.2014 KR 20140036295; 27.03.2014 KR 20140036296; 27.03.2014 KR 20140036297; 27.03.2014 KR 20140036304; 16.05.2014 KR 20140058733; 16.05.2014 KR 20140058734; 01.07.2014 KR 20140081901
(71) Applicant: Humax Holdings Co., Ltd., Yongin-si 449-934 (KR)
(72) Inventor: Yie, Alex Chungku, 403-011 Incheon (KR); Lee, Yongjae, 463-070 Seongnam-si (KR); Ahn, Jun Bae, 464-110 Gwangju-si (KR)
(74) Representative: Zardi, Marco

(57) **Abstract**

Disclosed herein is to transmit D2D data using a broadcasting channel of LTE. That is, a system and method for transmitting broadcasting data on LTE D2D communications are disclosed, which can efficiently use an existing channel of LTE without providing a separate channel for the D2D communications. The system for transmitting broadcasting data on LTE D2D communications includes a first base station configured to wirelessly provide a mobile communication service; and a first terminal configured to receive the mobile communication service from the first base station, wherein the first terminal performs D2D communications with at least one of a second terminal configured to wirelessly receive the mobile communication service from the first base station, a third terminal configured to receive the mobile communication service from a second base station that wirelessly provides a mobile communication service in a different area from the first base station, and a fourth terminal which does not receive the mobile communication service.

## Description

### BACKGROUND OF THE INVENTION

### Field of the Invention

Exemplary embodiments of the present invention relate to a system and method for transmitting broadcasting data on LTE D2D communications, and more particularly, to the transmission of D2D data using a broadcasting channel of LTE. That is, exemplary embodiments of the present invention relate to a system and method for transmitting broadcasting data on LTE D2D communications efficiently using an existing channel of LTE without providing a separate channel for the D2D communications.

### Description of the Related Art

With the development of LTE technology, data rates have been continuously increased in the field of wireless data transmission. Further, lots of data are frequently transmitted and received even between terminals connected to a macro cell. In this case, a macro base station takes wireless resource occupation of two terminals, and thus efficiency of wireless resources deteriorates. Accordingly, methods for transmitting and receiving data between terminals through minimization of an influence on the macro base station without waste of wireless resources have been researched.

As one of such technology, in a mobile communication system, a technology to provide device-to-device communications between adjacent terminals, within a radius of 1 to 2 km, positioned in the same or neighboring cell has been considered.

The device-to-device communications (hereinafter also referred to as "D2D communications") mean a communication method in which direct data transmission and reception is performed between two adjacent terminals without passing through the base station. That is, the D2D communication technology is a technology which sets a D2D wireless link through a mobile communication wireless interface that uses a mobile communication frequency band between the adjacent devices and then directly transmits and receives data between the devices through the D2D wireless link without passing through the base station.

Such a D2D communication technology has various advantages. Unlike existing technologies of WiFi Direct, Bluetooth, Zigbee, and the like, which can support only communications between devices within several hundreds of meters, the D2D communication technology enables direct communications between the devices positioned within a radius of 1 to 2 km to be performed on the basis of middle and long distance transmission ability that is provided by a mobile communication wireless interface.

In addition, since the communications between the adjacent devices do not occupy a network, the load of the network can be reduced. Further, in the case where the adjacent devices that are positioned in cell boundary areas perform communications with each other via the base station, only low-speed data transmission becomes possible, whereas in the case where the devices perform direct communications with each other, high-speed data transmission becomes possible due to surely improved signal environment between the adjacent devices, and thus services of better performance can be provided to users.

As an example, Korean unexamined patent publication no. 10-2013-0134821 discloses a resource scheduling method for device-to-device communications in a communication system, which includes selecting a mobile communication terminal that communicates with a base station by channels that divide mobile communication resources occupied by the base station, calculating signal-to-noise ratios of the mobile communication terminals on the assumption that terminal pairs for the device-to-device communications between the mobile communication terminal that is selected by channels and the mobile communication terminal that is positioned in a service area of the base station are respectively allocated, comparing the signal-to-noise ratio of the mobile communication terminal that is calculated by channels with a first threshold value and determining the terminal pairs having the signal-to-noise ratios that exceed the first threshold value by channels as candidate members of a combination that shares the corresponding channels, and determining whether to allocate the corresponding channels to the respective candidate members of the combination determined by channels.

However, even in this case, there is a need for solutions to channel allocation required for the D2D communications, interference removal, grouping between terminals, broadcasting data transmission method, frequency sharing problem, D2D terminal searching method, multi-hop method, interference with cellular, D2D installation problem, coverage, D2D communication channel operation method, and synchronization problems.

### [Related art document]

### [Patent document]

Korean unexamined patent publication no. 10-2013-0134821 (published on December 10, 2013)

### SUMMARY OF THE INVENTION

An object of the present invention is to provide a system and method for transmitting broadcasting data on LTE D2D communications, which can transit D2D data using a broadcasting channel of LTE.

Another object of the present invention is to provide a system and method for transmitting broadcasting data on LTE D2D communications, which can efficiently use an existing channel of LTE without providing a separate channel for the D2D communications.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with one aspect of the present invention, a system for transmitting broadcasting data on LTE D2D communications includes a first base station configured to wirelessly provide a mobile communication service; and a first terminal configured to receive the mobile communication service from the first base station, wherein the first terminal performs D2D communications with at least one of a second terminal configured to wirelessly receive the mobile communication service from the first base station, a third terminal configured to receive the mobile communication service from a second base station that wirelessly provides a mobile communication service in a different area from the first base station, and a fourth terminal which does not receive the mobile communication service.

Here, the first base station may use any one of allocation of a new frequency, additional allocation of a sub-channel in the same frequency, and sharing of the same channel in the same frequency so that the first terminal can perform the D2D communication, a synchronization signal for the D2D communications may use any one of providing through an uplink channel, providing through a broadcasting channel, and simultaneous providing through both the uplink and broadcasting channels, and as a technique for preventing interference between a wireless channel of the first base station and a wireless channel of the D2D communications performed by the first terminal, at least one of a channel allocation technique, a channel management technique, and a duplexing method may be used.

Further, the first terminal may transmit D2D data through a PBCH, and information included in the PBCH may include at least one of information that is the same as the contents of the PBCH transmitted from the first base station to the first terminal, a channel bandwidth of a broadcasting signal for the D2D, a detailed structure of a PHICH channel for the D2D, an SFN for the D2D, antenna use information for the D2D, information that limits transmission power of the terminal used for the D2D, and information of the D2D that is used in a neighboring base station.

Here, the information of the D2D may include at least one of a frequency that a D2D terminal uses, a bandwidth, a used base station, and the number of terminals that simultaneously perform D2D communications with the D2D terminal.

Further, the first terminal may transmit D2D data through a PDSCH, and information included in the PDSCH may include at least one of information that is the same as the contents of the PDSCH transmitted from the first base station to the first terminal, system information for a D2D terminal, wireless resource setting information for the D2D terminal, cell selection common reference information for the D2D terminal, neighboring cell information in the same frequency for the D2D terminal, and neighboring cell information of the other frequency in the same LTE for the D2D terminal.

Here, the first terminal may perform a D2D frequency request operation that requests a common frequency for the D2D communications with the second terminal from the first base station, a D2D frequency allocation operation that allocates the common frequency in response to the D2D frequency request operation, and a D2D frequency sharing operation that transmits the result of the D2D frequency allocation operation to the second terminal.

Further, the first terminal may control an RF switch to make transmission timing and reception timing with the second terminal be opposite to each other.

Here, the first terminal may perform a D2D frequency request operation that requests a common frequency for the D2D communications with the third terminal having a different service provider from the first base station, a D2D frequency allocation request operation that requests allocation of the D2D frequency from the second base station according to the request of the D2D frequency request operation, a D2D frequency allocation response operation that responds to the D2D frequency allocation in response to the D2D frequency allocation request operation, and a D2D frequency sharing operation that transmits the result of the D2D frequency allocation response operation to the third terminal.

Further, the first terminal may control an RF switch to make transmission timing and reception timing with the third terminal be opposite to each other.

Here, the first terminal may transmit AMC information to the second terminal using at least one of an AMC method that is used in the first base station, TTI bundling, repeated transmission, code diffusion, RLC segmentation, low coding, low-order modulation method, power increase, and power density increase.

Further, the second terminal may transmit results of CNR, SNR, MER, and HARQ on a reception side for setting AMC to the first terminal using at least one of the same transmission method in the first base station, TTI bundling, repeated transmission, code diffusion, RLC segmentation, low coding, low-order modulation method, power increase, and power density increase.

Here, the first terminal may perform a D2D frequency request operation that requests a common frequency for the D2D communications with the third terminal having a different service provider and a different use frequency from the first base station, a D2D frequency allocation request operation that requests allocation of the D2D frequency from the second base station according to the request of the D2D frequency request operation, a D2D frequency allocation response operation that responds to the D2D frequency allocation in response to the D2D frequency allocation request operation, and a D2D frequency sharing operation that transmits the result of the D2D frequency allocation response operation to the third terminal.

Further, the first terminal may control an RF switch to make transmission timing and reception timing with the third terminal be opposite to each other.

Here, the first terminal may transmit a discovery signal for discovering a D2D terminal to the second terminal that performs the D2D communication with the first terminal when at least 0.001 msec elapses after receiving a synchronization signal from the first base station.

Further, if a synchronization signal transmitted from the first base station and a synchronization signal transmitted from the first terminal are simultaneously received, the second terminal may select and use the synchronization signal transmitted from the base station.

Here, the first terminal itself may transmit a synchronization signal that is transmitted from the first base station if the synchronization signal is received with a level that is equal to or lower than a reference value that is in a range of + 1 dB to +30 dB from a minimum reception level, and may interrupt the transmission of the synchronization signal that is transmitted by the first terminal itself if the synchronization signal is received with a level that is equal to or higher than a specific value that is in the range of +1 dB to +30 dB from the minimum reception level.

Further, the first terminal may transmit a synchronization signal using at least one of temporal arrangement, frequency arrangement, and a kind of pseudo noise, which is different from that of a synchronization signal that is transmitted from the first base station.

Here, the first terminal may transmit a synchronization signal arranged to time and frequency to the second terminal with repetition at least once to 16 times.

Further, the first terminal may transmit at least one of a first terminal ID, a second terminal ID, broadcast information, multicast information, and specific information of the first terminal, simultaneously with a discovery signal that is transmitted from the first terminal.

Here, the first terminal may transmit D2D data through any one of a PDCCH and a PDSCH in addition to a PBCH, and information included in the PBCH, PDCCH, and PDSCH may include at least one of information that is the same as the contents of the PBCH transmitted from the first base station to the first terminal, a channel bandwidth of a broadcasting signal for the D2D, a detailed structure of a PHICH channel for the D2D, an SFN for the D2D, antenna use information for the D2D, information that limits transmission power of the terminal used for the D2D, and information of the D2D that is used in a neighboring base station.

Further, the information of the D2D may includes at least one of a frequency that a D2D terminal uses, a bandwidth, a used base station, and the number of terminals that simultaneously perform D2D communications with the D2D terminal.

Here, the first terminal may transmit D2D data through any one of a PDCCH, a PUCCH and a PUSCH in addition to a PDSCH, and information included in the PDSCH, PDCCH, PUCCH or PUSCH may include at least one of information that is the same as the contents of the PDSCH transmitted from the first base station to the first terminal, system information for a D2D terminal, wireless resource setting information for the D2D terminal, cell selection common reference information for the D2D terminal, neighboring cell information in the same frequency for the D2D terminal, and neighboring cell information of the other frequency in the same LTE for the D2D terminal.

The system and method for transmitting broadcasting data on LTE D2D communications have the advantages that the D2D data can be transmitted using the broadcasting channel of the LTE.

Further, the system and method for transmitting broadcasting data on LTE D2D communications have the advantages that the existing channel of the LTE can be efficiently used without the necessity of providing a separate channel for the D2D communications.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a configuration diagram of a system for transmitting broadcasting data on LTE D2D communications in accordance with an embodiment of the present invention;
FIG. 2 is a flowchart illustrating a method for transmitting data using PBCH through a first terminal of FIG. 1;
FIG. 3 is a flowchart illustrating a method for transmitting data using PDSCH through a first terminal of FIG. 1;
FIG. 4 is a flowchart illustrating a method for transmitting data in the case where use frequencies of a first terminal and a second terminal of FIG. 1 are different from each other;
FIG. 5 is a flowchart illustrating a method for transmitting data in the case where different service providers provide services to a first terminal and a third terminal of FIG. 1;
FIG. 6 is a flowchart illustrating a method for reliably transmitting AMC through a first terminal of FIG. 1;
FIG. 7 is a flowchart illustrating a method for transmitting data in the case where different service providers provide services to a first terminal and a third terminal of FIG. 1, and use frequencies thereof are different from each other;
FIG. 8 is a flowchart illustrating a method for transmitting a discovery signal from a first terminal to a second terminal of FIG. 1;
FIG. 9 is a flowchart illustrating a method for timing alignment through a first terminal of FIG. 1;
FIG. 10 is a flowchart illustrating a method for retransmitting a synchronization signal through a first terminal of FIG. 1;
FIG. 11 is a flowchart illustrating a method for discriminating a synchronization signal through a first terminal of FIG. 1;
FIG. 12 is a flowchart illustrating a method for mapping a synchronization signal through a first terminal of FIG. 1;
FIG. 13 is a flowchart illustrating a method for transmitting a message for discovering a second terminal through a first terminal of FIG. 1;
FIG. 14 is a flowchart illustrating another method for transmitting data using PBCH through a first terminal of FIG. 1; and
FIG. 15 is a flowchart illustrating still another method for transmitting data using PDSCH through a first terminal of FIG. 1.

### DESCRIPTION OF SPECIFIC EMBODIMENTS

Embodiments of the present invention are described in detail below with reference to the accompanying drawings.

The present invention may be modified in various ways and may have various embodiments. Specific embodiments will be exemplarily illustrated in the drawings and will be described in detail in the detailed description. This is not intended to limit the present invention to the specific embodiments, and it would be understood by one of ordinary skill in the art that a variety of equivalents, modifications, and replacements of the embodiments are included in the idea and technical range of the present invention.

Hereinafter, referring to the accompanying drawings, a system and method for transmitting broadcasting data on LTE D2D communications in accordance with the present invention will be described in detail.

In the present invention, a terminal to be described may be called a user device or user equipment (UE), and may be a cellular phone, a satellite phone, a codeless phone, a session initiation protocol (SIP) phone, a wireless local loop (WLL) station, a personal digital assistant (PDA), a handheld device having a wireless connection function, a computing device, or any other processing device connected to a wireless modem.

Further, in the present invention, a base station to be described may be used for communications with terminals, and may be called an access point, a node B, an elevated base station (eBS), or some other wordings.

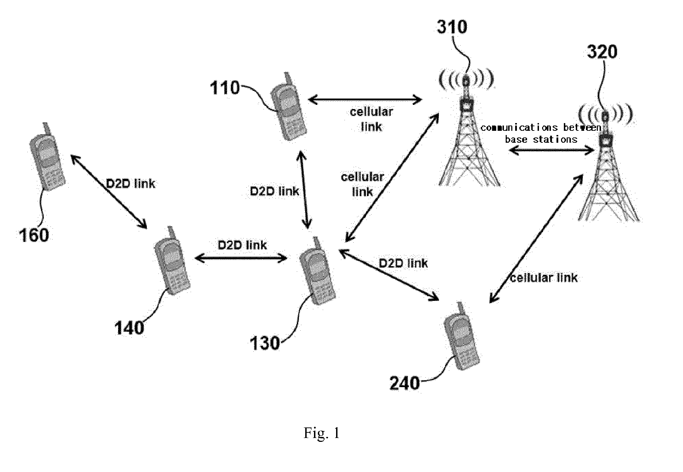

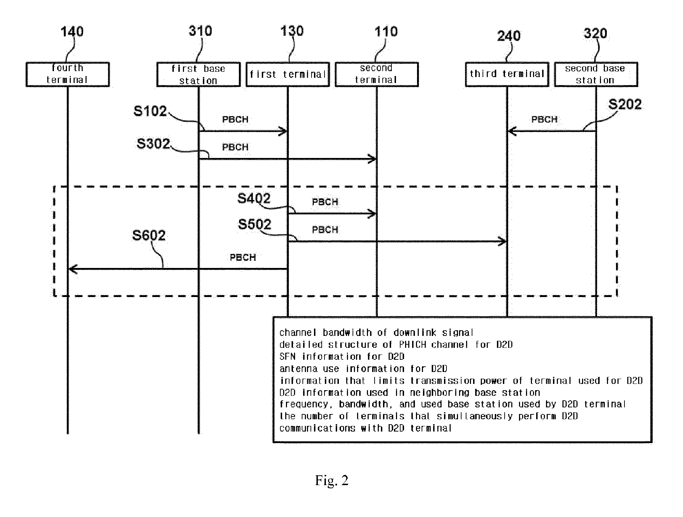

FIG. 1 is a configuration diagram of a system for transmitting broadcasting data on LTE D2D communications in accordance with an embodiment of the present invention. Here, FIGS. 2 to 15 are flowcharts explaining in detail FIG. 1.

Hereinafter, referring to FIGS. 1 to 15, a system for transmitting broadcasting data on LTE D2D communications will be described.

First, referring to FIG. 1, a system for transmitting broadcasting data on LTE D2D communications in accordance with one aspect of the present invention includes a first base station 310 configured to wirelessly provide a mobile communication service, and a first terminal 130 configured to receive the mobile communication service from the first base station 310, wherein the first terminal 130 performs D2D communications with at least one of a second terminal 110 configured to wirelessly receive the mobile communication service from the first base station 310, a third terminal 240 configured to receive the mobile communication service from a second base station 320 that wirelessly provides a mobile communication service in a different area from the first base station 310, and a fourth terminal 140 configured not to receive the mobile communication service.

Here, the first base station 310 may use any one of allocation of a new frequency, additional allocation of a sub-channel in the same frequency, and sharing of the same channel in the same frequency so that the first terminal 130 can perform the D2D communication, and a synchronization signal for the D2D communications may use any one of providing through an uplink channel, providing through a broadcasting channel, and simultaneous providing through both the uplink and broadcasting channels. As a technique for preventing interference between a wireless channel of the first base station 310 and a wireless channel of the D2D communications performed by the first terminal 130, at least one of a channel allocation technique, a channel management technique, and a duplexing method may be used.

The D2D communications may be divided into a discovery to find a D2D terminal for D2D data communications and D2D communication to actually perform communications after the discovery.

First, the discovery includes discovery information and channel prediction information in a signal and a message required to find the D2D terminal.

A frame that is used in the message and sequence of the discovery may be used in a similar manner to PUSCH of an LTE uplink, the discovery in a short distance uses a normal cyclic prefix, and the discovery in an extended range uses an extended cyclic prefix.

In order to transmit the message and sequence of the discovery, QPSK, turbo code, interleaver, and CRC-24 are used.

The message and sequence of the discovery are transmitted with the same frequency and at the same time.

On the other hand, the D2D communications are used to perform the D2D communication, and include use of a physical channel for synchronization and communications between terminals.

The synchronization of the D2D communications is to match the synchronization between the terminals through transmission of a D2D synchronization signal, and uses the same frequency and time between the terminals.

The synchronization sequence of the D2D communications includes at least one of ZC sequence and M sequence.

The synchronization contents of the D2D communications include at least one of an ID of a synchronization source that outputs the synchronization signal, a type of the synchronization source, resource allocation of a control signal, and data.

The physical channel for the D2D communications includes at least one of a D2D synchronization signal (D2DSS), a physical D2D synchronization channel (PD2DSCH) that is a physical D2D synchronization channel, a cluster head control channel (CH-CCH), a cluster head data channel (CH-DCH), a D2D data channel, and a request (REQ) channel to request resources.

Here, the D2DSS is transmitted from a cluster head that is a synchronization source of a cluster composed of the D2D terminal, and provides a synchronization reference.

Further, the PD2DSCH includes synchronization information, such as SFN and a synchronization state, and setting information, such as a channel bandwidth and resource setting information, in the cluster head.

On the other hand, the CH-CCH is transmitted from the cluster head to a transmission terminal and a reception terminal in the cluster. The CH-CCH includes transmission information for transmission, but does not include a control portion for decoding.

Further, the CH-DCH is also transmitted from the cluster head to the transmission terminal and the reception terminal in the cluster, and transmits data to be transmitted by scheduling of the CH-CCH.

The D2D data channel is a channel through which the transmission terminal in the cluster transmits data to the reception terminal, and the CH-CCH information is monitored and transmitted through an allocated resource.

The REQ channel is a channel that is used when the transmission terminal requests resource allocation from the cluster head. Here, a D2D buffer state, interference information measured by the transmission terminal, and usable transmission power are requested, and REQ channels of various transmission terminals are divided into frequencies to be transmitted to the cluster head.

Accordingly, the D2DSS, PD2DSCH, CH-CCH, and CH-SCH used during transmission from the cluster to the terminal, the REQ channel used during transmission from the terminal to the cluster head, and the D2D data channel used between the terminals use any one of the PBCH, PSS/SSS, PDCCH, and PUCCH of the LTE.

FIG. 2 is a flowchart illustrating a method for transmitting data using PBCH through a first terminal 130 of FIG. 1. Here, the first terminal 130 may transmit the D2D data through the PBCH, and information included in the PBCH may include at least one of information that is the same as the contents of the PBCH transmitted from the first base station 310 to the first terminal 130, a channel bandwidth of a broadcasting signal for the D2D, a detailed structure of a PHICH channel for the D2D, an SFN for the D2D, antenna use information for the D2D, information that limits transmission power of the terminal used for the D2D, and information of the D2D that is used in the neighboring base station.

Here, the information of the D2D may includes at least one of a frequency that the D2D terminal uses, a bandwidth, a used base station, and the number of terminals that simultaneously perform D2D communications with the D2D terminal.

The base station PBCH information S102 is broadcasting information that is transmitted from the first base station 310 to the first terminal 130, and the base station PBCH information S302 is broadcasting information transmitted to the second terminal 110. The base station PBCH information S102 and the base station PBCH information S302 may be information that includes the same contents and is used to broadcast typical base station information through the LTE base station.

On the other hand, the base station PBCH information S202 is broadcasting information that is transmitted from the second base station 320 to the third terminal 240, and includes information which is different from the base station PBCH information S102 that is transmitted from the first base station 310.

D2D PBCH information S402 is broadcasting information that is transmitted from the first terminal 130 to the second terminal 110, and further includes information that is related to the D2D in addition to the contents that are typically used in the LTE base station. D2D PBCH information S502 is broadcasting information that is transmitted from the first terminal 130 to the third terminal 240, and includes the same contents as the D2D PBCH information S402. Further, D2D PBCH information S602 is broadcasting information that is transmitted from the first terminal 130 to the fourth terminal 140, and includes the same contents as the D2D PBCH information S402.

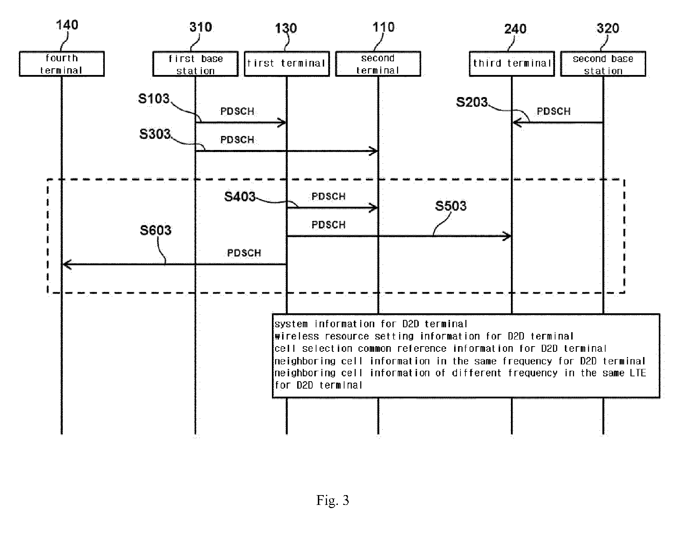

FIG. 3 is a flowchart illustrating a method for transmitting data using PDSCH through a first terminal 130 of FIG. 1. Here, the first terminal 130 may transmit D2D data through a PDSCH, and information included in the PDSCH may include at least one of information that is the same as the contents of the PDSCH transmitted from the first base station 310 to the first terminal 130, system information for a D2D terminal, wireless resource setting information for the D2D terminal, cell selection common reference information for the D2D terminal, neighboring cell information in the same frequency for the D2D terminal, and neighboring cell information of the other frequency in the same LTE for the D2D terminal.

Base station PDSCH information S103 is broadcasting information that is transmitted from the first base station 310 to the first terminal 130, and base station PDSCH information S303 is broadcasting information that is transmitted to the second terminal 110. The base station PDSCH information S103 and the base station PDSCH information S303 may be information that includes the same contents and is typically used as the broadcasting information in the LTE base station.

On the other hand, the base station PDSCH information S203 is broadcasting information that is transmitted from the second base station 320 to the third terminal 240, and includes information which is different from the base station PDSCH information S102 that is transmitted from the first base station 310.

D2D PDSCH information S403 is broadcasting information that is transmitted from the first terminal 130 to the second terminal 110, and further includes information that is related to the D2D in addition to the contents that are typically used in the LTE base station. D2D PDSCH information S503 is broadcasting information that is transmitted from the first terminal 130 to the third terminal 240, and includes the same contents as the D2D PDSCH information S403. Further, D2D PBCH information S603 is broadcasting information that is transmitted from the first terminal 130 to the fourth terminal 140, and includes the same contents as the D2D PDSCH information S403.

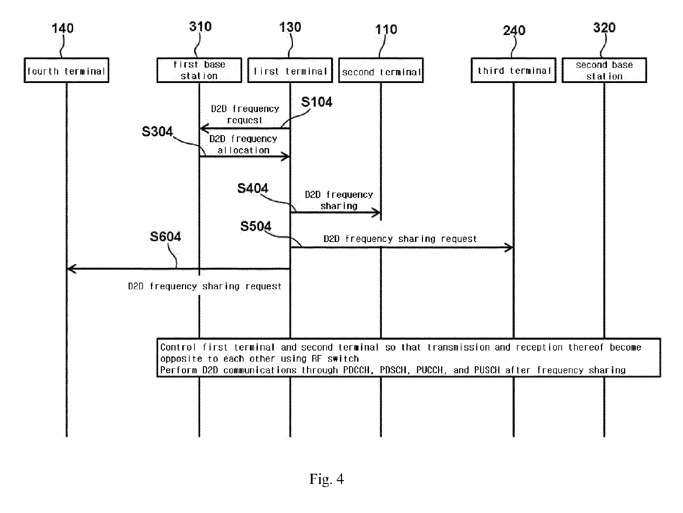

FIG. 4 is a flowchart illustrating a method for transmitting data in the case where use frequencies of a first terminal 130 and a second terminal 110 of FIG. 1 are different from each other. Here, the first terminal 130 may perform a D2D frequency request operation S104 that requests a common frequency for the D2D communications with the second terminal 110 from the first base station 310, a D2D frequency allocation operation S304 that allocates the common frequency in response to the D2D frequency request operation S104, and a D2D frequency sharing operation S404 that transmits the result of the D2D frequency allocation operation S304 to the second terminal 110.

Further, the first terminal 130 may control an RF switch to make transmission timing and reception timing with the second terminal 110 be opposite to each other.

On the other hand, at the D2D frequency allocation operation S304, a frequency except for the frequencies used in the first terminal 130 and the second terminal 110 may be allocated.

Further, since the second terminal 110 receives the mobile communication service from the first base station that is the same base station, the first terminal 130 may be allocated with the common frequency for the D2D communications of the first terminal 130 and the second terminal 110 from the first base station 310.

On the other hand, since the first terminal 130 is unable to perform the D2D communications unless wireless frequency interference problems with the third terminal 240 or the fourth terminal 140 that does not receive the mobile communication service through the same base station are solved, the first terminal 130 may request the D2D frequency sharing from the third terminal 240 or the fourth terminal 140.

A new wireless resource in a TDD (Time Division Duplex) method is one frequency that can be commonly used by the first terminal 130 and the second terminal 110. In this case, RF switches in the first terminal 130 and the second terminal 110 should be controlled so that the transmission timing and the reception timing of the first terminal 130 and the second terminal 110 become opposite to each other.

A new wireless resource in an FDD (Frequency Division Duplex) method may differently use the frequency that is directed from the first terminal 130 to the second terminal 110 and the frequency that is directed from the second terminal 110 to the first terminal 130. In this case, RF switches in the first terminal 130 and the second terminal 110 should be controlled so that the transmission timing and the reception timing of the first terminal 130 and the second terminal 110 become opposite to each other.

After completion of the wireless resource allocation, the D2D communications are performed through any one of the PDCCH, PDSCH, PUCCH, and PUSCH that are basic wireless channels of the LTE.

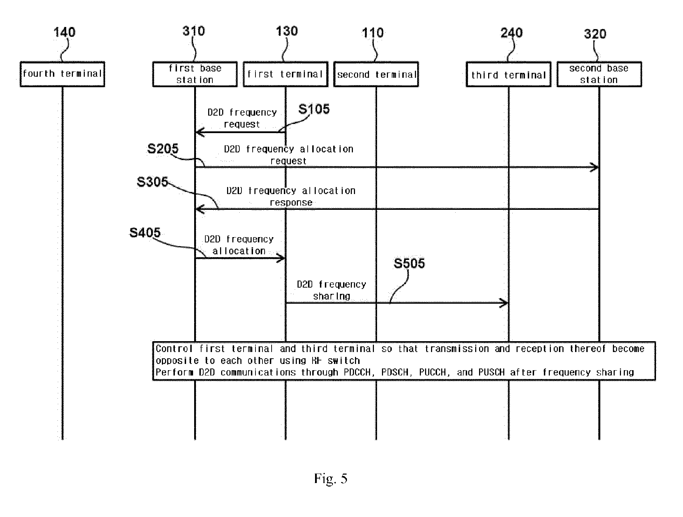

FIG. 5 is a flowchart illustrating a method for transmitting data in the case where different service providers provide services to a first terminal 130 and a third terminal 240 of FIG. 1. Here, the first terminal 130 may perform a D2D frequency request operation S105 that requests a common frequency for the D2D communications with the third terminal 240 having a different service provider from the first base station 130, a D2D frequency allocation request operation S205 that requests allocation of the D2D frequency from the second base station 320 according to the request of the D2D frequency request operation S105, a D2D frequency allocation response operation S305 that responds to the D2D frequency allocation in response to the D2D frequency allocation request operation S205, and a D2D frequency sharing operation S505 that transmits the result of the D2D frequency allocation response operation S305 to the third terminal 240.

Further, the first terminal 130 may control an RF switch to make transmission timing and reception timing with the third terminal 240 be opposite to each other.

On the other hand, at the D2D frequency allocation response operation S305, a frequency except for the frequencies used in the first terminal 130 and the third terminal 240 may be allocated.

A new wireless resource in a TDD method is one frequency that can be commonly used by the first terminal 130 and the third terminal 240. In this case, RF switches in the first terminal 130 and the third terminal 240 should be controlled so that the transmission timing and the reception timing of the first terminal 130 and the third terminal 240 become opposite to each other.

A new wireless resource in an FDD method may differently use the frequency that is directed from the first terminal 130 to the third terminal 240 and the frequency that is directed from the third terminal 240 to the first terminal 130. In this case, RF switches in the first terminal 130 and the third terminal 240 should be controlled so that the transmission timing and the reception timing of the first terminal 130 and the third terminal 240 become opposite to each other.

After completion of the wireless resource allocation, the D2D communications are performed through any one of the PDCCH, PDSCH, PUCCH, and PUSCH that are basic wireless channels of the LTE.

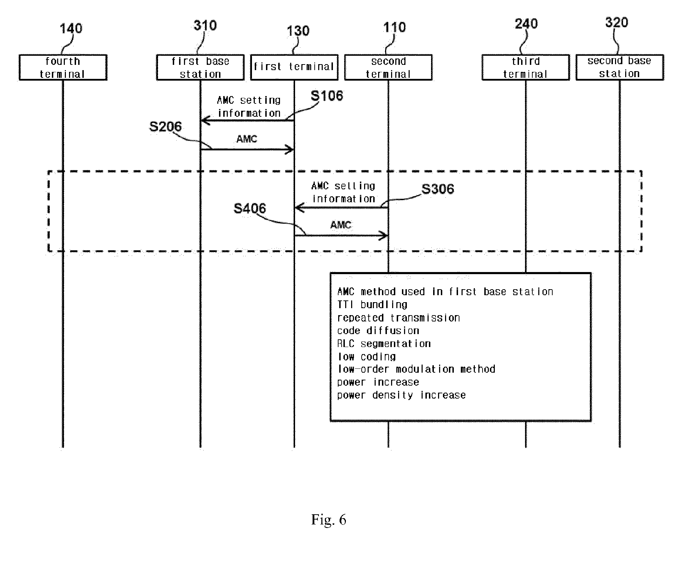

FIG. 6 is a flowchart illustrating a method for reliably transmitting AMC through a first terminal 130 of FIG. 1. Here, the first terminal 130 may transmit AMC information to the second terminal 110 using at least one of an AMC method that is used in the first base station 310, TTI bundling, repeated transmission, code diffusion, RLC segmentation, low coding, low-order modulation method, power increase, and power density increase.

Further, the second terminal 110 may transmit results of CNR, SNR, MER, and HARQ on a reception side for setting AMC to the first terminal 130 using at least one of the same transmission method in the first base station 310, TTI bundling, repeated transmission, code diffusion, RLC segmentation, low coding, low-order modulation method, power increase, and power density increase.

Here, CNR (Carrier to Noise Ratio), SNR (Signal to Noise Ratio), and MER (Message Error Ratio) are barometers that indicate the reception quality, and HARQ (Hybrid ARQ) is information that transmits existence/nonexistence of reception error even after error demodulation.

That is, AMC setting information S106 and AMC information S206 that are used in the first terminal 130 and the first base station 310 may include the same information as AMC setting information S306 and AMC information S406 that are used in the first terminal 130 and the second terminal 110, or may use TTI bundling, repeated transmission, code diffusion, RLC segmentation, low coding, low-order modulation method, power increase, and power density increase.

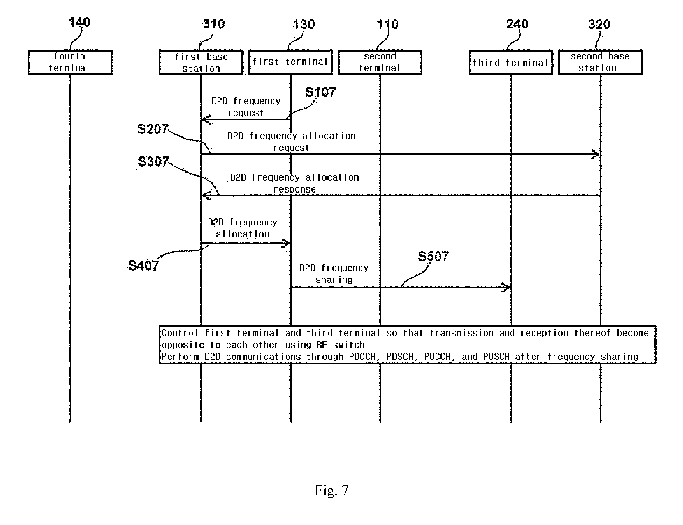

FIG. 7 is a flowchart illustrating a method for transmitting data in the case where different service providers provide services to a first terminal 130 and a third terminal 240 of FIG. 1, and use frequencies thereof are different from each other. Here, the first terminal 130 may perform a D2D frequency request operation S107 that requests a common frequency for the D2D communications with the third terminal 240 having a different service provider and a different use frequency from the first base station 310, a D2D frequency allocation request operation S207 that requests allocation of the D2D frequency from the second base station 320 according to the request of the D2D frequency request operation S107, a D2D frequency allocation response operation S307 that responds to the D2D frequency allocation in response to the D2D frequency allocation request operation S207, and a D2D frequency sharing operation S507 that transmits the result of the D2D frequency allocation response operation S307 to the third terminal 240.

Further, the first terminal 130 may control an RF switch to make transmission timing and reception timing with the third terminal 240 be opposite to each other.

On the other hand, at the D2D frequency allocation response operation S307, a frequency except for the frequencies used in the first terminal 130 and the third terminal 240 may be allocated.

A new wireless resource in a TDD method is one frequency that can be commonly used by the first terminal 130 and the third terminal 240. In this case, RF switches in the first terminal 130 and the third terminal 240 should be controlled so that the transmission timing and the reception timing of the first terminal 130 and the third terminal 240 become opposite to each other.

A new wireless resource in an FDD method may differently use the frequency that is directed from the first terminal 130 to the third terminal 240 and the frequency that is directed from the third terminal 240 to the first terminal 130. In this case, RF switches in the first terminal 130 and the third terminal 240 should be controlled so that the transmission timing and the reception timing of the first terminal 130 and the third terminal 240 become opposite to each other.

After completion of the wireless resource allocation, the D2D communications are performed through any one of the PDCCH, PDSCH, PUCCH, and PUSCH that are basic wireless channels of the LTE.

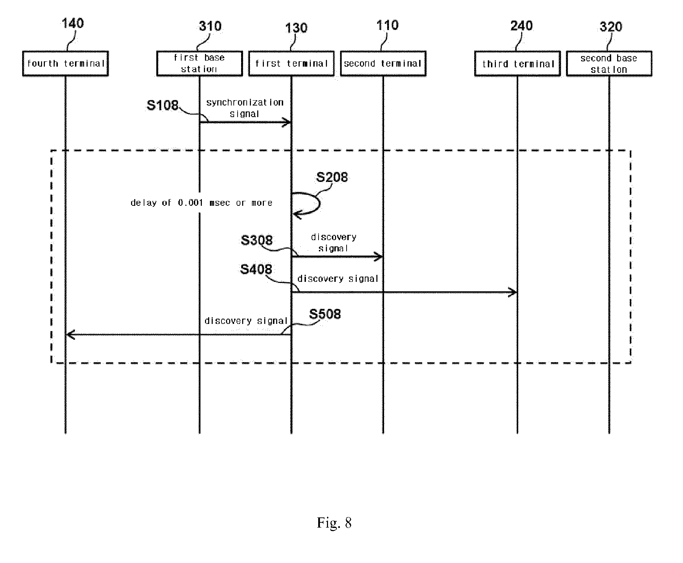

FIG. 8 is a flowchart illustrating a method for transmitting a discovery signal from a first terminal 130 to a second terminal 110 of FIG. 1. Here, the first terminal 130 may transmit a discovery signal for discovering a D2D terminal to the second terminal 110 that performs the D2D communication with the first terminal 130 when at least 0.001 msec elapses after receiving a synchronization signal from the first base station 310.

In this case, if the discovery signal is smaller than 0.001 msec, the synchronization signal that is generated from the first base station 310 may interfere with the discovery signal that is generated from the first terminal 130 due to signal delay by wireless environment fading during reception of the synchronization signal in the second terminal 110 to exert an influence on the reception of the discovery signal.

That is, regardless of the case where the first base station 310 is operated in the FDD and TDD methods, the first base station 310 transmits the synchronization signal only at a discovery signal time that is allocated to the first terminal 130.

In the case of the TDD, when the first base station 310 transmits the synchronization signal, the first terminal 130 may transmit the discovery signal within a time of forward direction of the first base station 310 or may transmit the discovery signal when the first base station 310 operates in a backward direction.

If the first terminal 130 transmits the discovery signal in the forward time after receiving the synchronization signal, the first terminal 130 transmits the discovery signal to a predefined frame so as to transmit the discovery signal.

Further, in the case of transmission in the backward direction, the first terminal 130 adjusts RF power not to exert an influence on the first base station 310.

In the case of the FDD, the first base station 310 operates simultaneously in the forward and backward directions. In this case, the first terminal 130 may transmit the discovery signal through a forward channel or through a reverse channel.

If the first terminal 130 transmits the discovery signal in the forward time after receiving the synchronization signal, the first terminal 130 transmits the discovery signal to a predefined frame so as to transmit the discovery signal.

Further, in the case of transmission in the backward direction, the first terminal 130 may immediately transmit the discovery signal after receiving the synchronization signal, and adjust RF power not to exert an influence on the first base station 310.

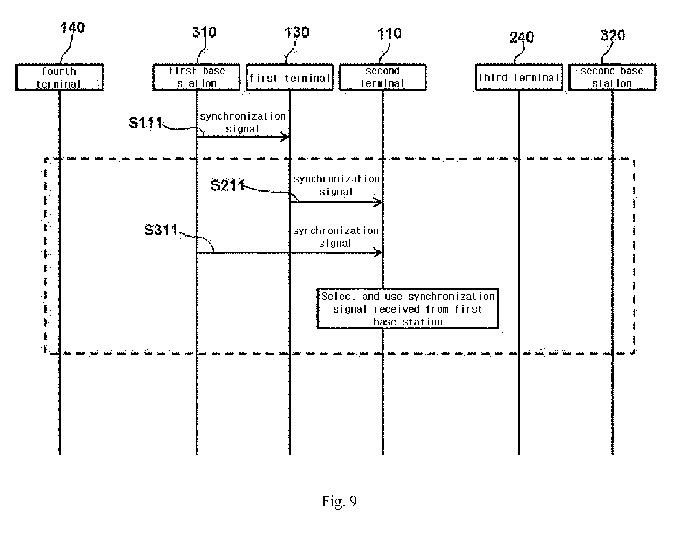

FIG. 9 is a flowchart illustrating a method for timing alignment through a first terminal 130 of FIG. 1. Here, if the synchronization signal S311 transmitted from the first base station 310 and the synchronization signal S211 transmitted from the first terminal 130 are simultaneously received, the second terminal 110 may select and use the synchronization signal S311 transmitted from the base station 310.

The first terminal 130 receives the synchronization signal S111 from the first base station 310, and retransmits the synchronization signal S211 to the second terminal 110 that is connected to the first terminal 130. In this case, the second terminal 110 simultaneously receives the synchronization signals from the first base station 310 and the first terminal 130.

In order to heighten the reception quality, the second terminal 110 preferentially use the synchronization signal S311 that is received from the first base station 310.

The recycling of the synchronization signal may be performed once or more, and as the recycling continues, the quality deteriorates due to a jitter problem that the timing of the synchronization signal is shaken in time.

Accordingly, since the synchronization signal S311 that is provided from the first base station 310 has a good quality, the second terminal 110 preferentially select and use the synchronization signal S311 that is provided from the first base station 310 rather than the synchronization signal S211 that is provided from the first terminal 130.

In this case, the kinds of synchronization signals are discriminated to be used so that the synchronization signals that are transmitted from the first base station 310 and the first terminal can be discriminated from each other.

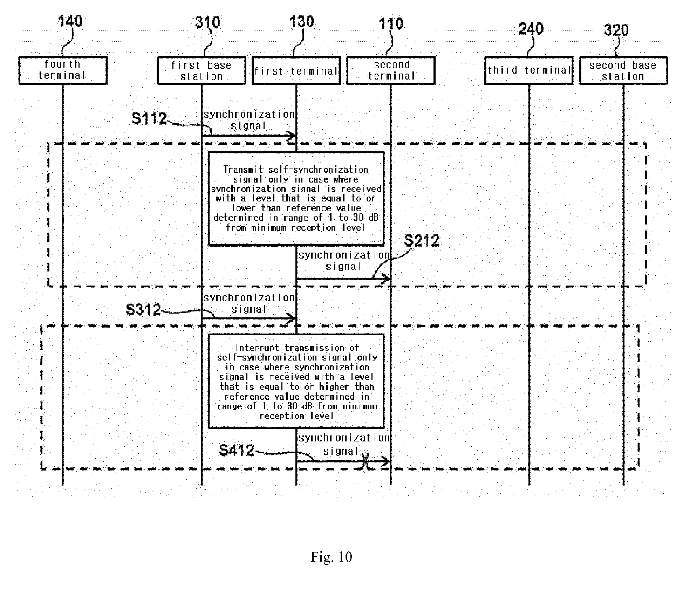

FIG. 10 is a flowchart illustrating a method for retransmitting a synchronization signal through a first terminal 130 of FIG. 1. Here, the first terminal 130 itself may transmit a synchronization signal S212 that is transmitted from the first base station 310 if the synchronization signal S212 is received with a level that is equal to or lower than a reference value that is in the range of +1 dB to +30 dB from the minimum reception level, and may interrupt the transmission of the synchronization signal S412 that is transmitted from the first terminal 130 itself if the synchronization signal is received with a level that is equal to or higher than a specific value that is in the range of +1 dB to +30 dB from the minimum reception level.

In order to perform the D2D communications between the first terminal 130 and the second terminal 110, the synchronization signal is essentially required. If the synchronization signal S112 that the first terminal 130 and the second terminal 110 receive from the first base station 310 is equal to or lower than a reference value, the first terminal 130 transmits the synchronization signal S312 to the second terminal 110.

In this case, if the synchronization signal that is received from the first base station 310 is equal to or lower than the reference value that is in the range of +1 dB to +30 dB from the minimum reception level, the first terminal 130 itself transmits the synchronization signal S212 to the second terminal 110.

Further, if the synchronization signal that is received from the first base station 310 is higher than the reference value that is in the range of +1 dB to +30 dB from the minimum reception level, the first terminal 130 interrupts the synchronization signal that is transmitted from the first terminal 130 to prevent the interference with the synchronization signal that is transmitted from the first base station 310.

However, in the case where the first terminal 130 can simultaneously perform reception and transmission, the first terminal 130 may immediately transmit the synchronization signal S412 through amplification of the synchronization signal S312.

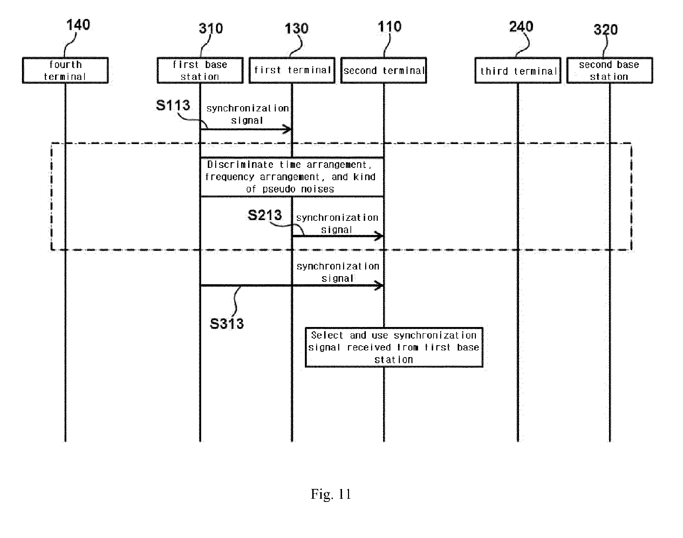

FIG. 11 is a flowchart illustrating a method for discriminating a synchronization signal through a first terminal 130 of FIG. 1. Here, the first terminal 130 may transmit a synchronization signal using at least one of temporal arrangement, frequency arrangement, and a kind of pseudo noise, which is different from that of the synchronization signal that is transmitted from the first base station 310.

The second terminal 110 receives a synchronous signal S313 from the first base station 310, and receives a synchronization signal S213 from the first terminal 130 at the same time. In this case, the second terminal 110 may discriminate the synchronization signals from each other to select the synchronization signal having good quality.

Since an OFDM (Orthogonal Frequency Division Multiplexing) modulation method can differently use the time and frequency arrangement, it can discriminate two or more synchronization signals from each other by differently using the time and frequency arrangement.

Further, since the OFDM modulation method differently uses pseudo noises even if the same time and frequency arrangement are used, it can discriminate the two synchronization signals from each other.

The LTE (Long Term Evolution) transmits the synchronization signal by differently using the time and frequency arrangement through PD2DSCH. Further, the LTE can discriminate the synchronization signals by using the pseudo noises.

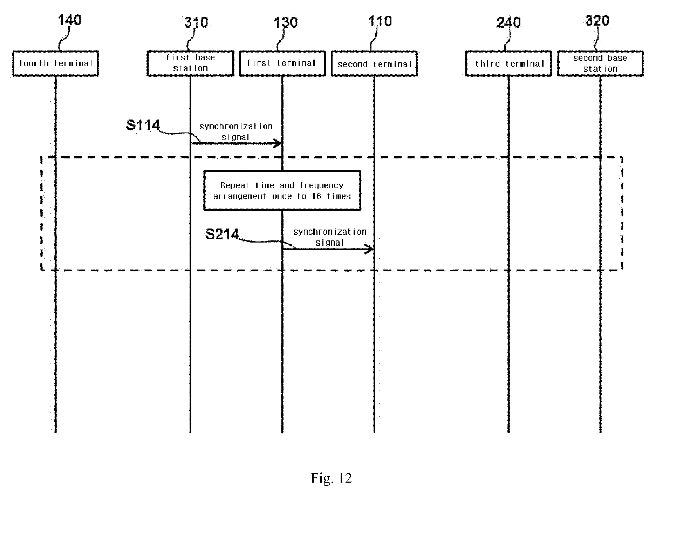

FIG. 12 is a flowchart illustrating a method for mapping a synchronization signal through a first terminal 130 of FIG. 1. Here, the first terminal 130 may transmit a synchronization signal arranged to the time and frequency to the second terminal 110 with repetition at least once to 16 times.

The reception sensitivity of the synchronization signal S214 in the second terminal 110 differs according to the distance between the first terminal 130 and the second terminal 110. That is, the reception probability of the synchronization signal has a distribution that the reception sensitivity is lowered as the distance becomes long.

Accordingly, through repetition of the synchronization signal according to the distance between the first terminal 130 and the second terminal 110, the first terminal 130 can relatively heighten the signal-to-noise ratio of the synchronization signal that is received from the second terminal 110.

The first terminal 130 repeats once to 16 times the synchronization signal that is properly arranged to the time and frequency in the same manner before transmitting the synchronization signal to the second terminal 110.

The number of repetitions may differ according to the distance from the second terminal 110, may be controlled according to a request of the second terminal 110, and may be controlled by the first terminal 130 through measurement of the reception level of the second terminal 110.

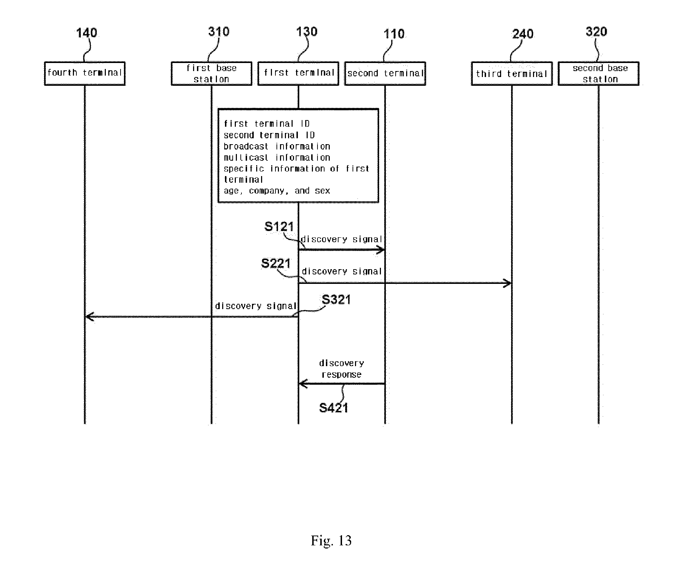

FIG. 13 is a flowchart illustrating a method for transmitting a message for discovering a second terminal 110 through a first terminal 130 of FIG. 1. Here, the first terminal 130 may transmit at least one of an ID of a first terminal 130, an ID of a second terminal 110, broadcast information, multicast information, and specific information of the first terminal 130, simultaneously with a discovery signal that is transmitted from the first terminal 130.

Here, the specific information may mean all pieces of information of an owner of the first terminal 130, such as age, company, and sex. Since the first terminal 130 additionally transmits the specific information together with the discovery signal, a D2D terminal that has received the specific information is connected to the first terminal 130 only in the case where the specific information is desired by the D2D terminal to simplify the connection process.

The first terminal 130 transmits the discovery signal S 121 to the second terminal 110, and the discovery signal S121 is the same as the discovery signal S221 that is transmitted from the first terminal 130 to the third terminal 240 and the discovery signal S321 that is transmitted from the first terminal 130 to the fourth terminal 140.

The second terminal 110 is a terminal that corresponds to the discovery signal S121 that is transmitted from the first terminal 130, and transmits a discovery response S421 to the first terminal 130 to perform the D2D communications.

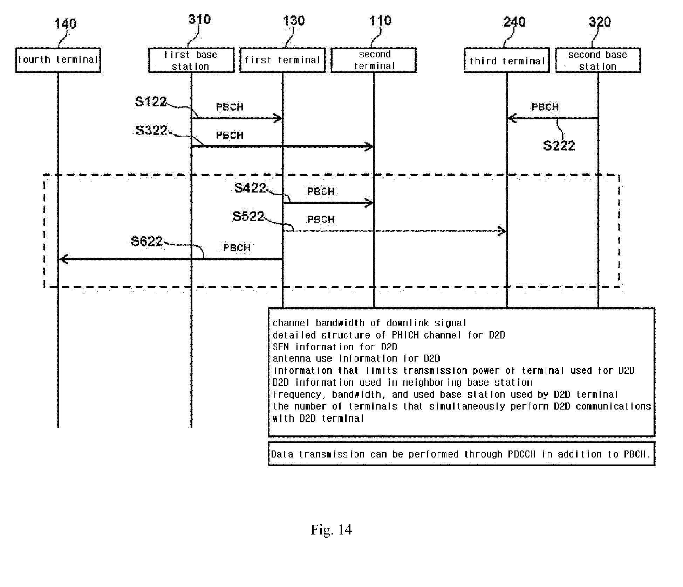

FIG. 14 is a flowchart illustrating another method for transmitting data using PBCH through a first terminal 130 of FIG. 1. Here, the first terminal 130 may transmit D2D data through any one of a PDCCH and a PDSCH in addition to a PBCH, and information included in the PBCH, PDCCH, and PDSCH may include at least one of information that is the same as the contents of the PBCH transmitted from the first base station 310 to the first terminal 130, a channel bandwidth of a broadcasting signal for the D2D, a detailed structure of a PHICH channel for the D2D, an SFN for the D2D, antenna use information for the D2D, information that limits transmission power of the terminal used for the D2D, and information of the D2D that is used in a neighboring base station.

Further, the information of the D2D may includes at least one of a frequency that a D2D terminal uses, a bandwidth, a used base station, and the number of terminals that simultaneously perform D2D communications with the D2D terminal.

The base station PBCH information S122 is broadcasting information that is transmitted from the first base station 310 to the first terminal 130, and the base station PBCH information S322 is broadcasting information transmitted to the second terminal 110. The base station PBCH information S122 and the base station PBCH information S322 may be information that includes the same contents and is used to broadcast typical base station information through the LTE base station.

On the other hand, the base station PBCH information S222 is broadcasting information that is transmitted from the second base station 320 to the third terminal 240, and includes information which is different from the base station PBCH information S 122 that is transmitted from the first base station 310.

D2D PBCH information S422 is broadcasting information that is transmitted from the first terminal 130 to the second terminal 110, and further includes information that is related to the D2D in addition to the contents that are typically used in the LTE base station. D2D PBCH information S522 is broadcasting information that is transmitted from the first terminal 130 to the third terminal 240, and includes the same contents as the D2D PBCH information S422. Further, D2D PBCH information S622 is broadcasting information that is transmitted from the first terminal 130 to the fourth terminal 140, and includes the same contents as the D2D PBCH information S422.

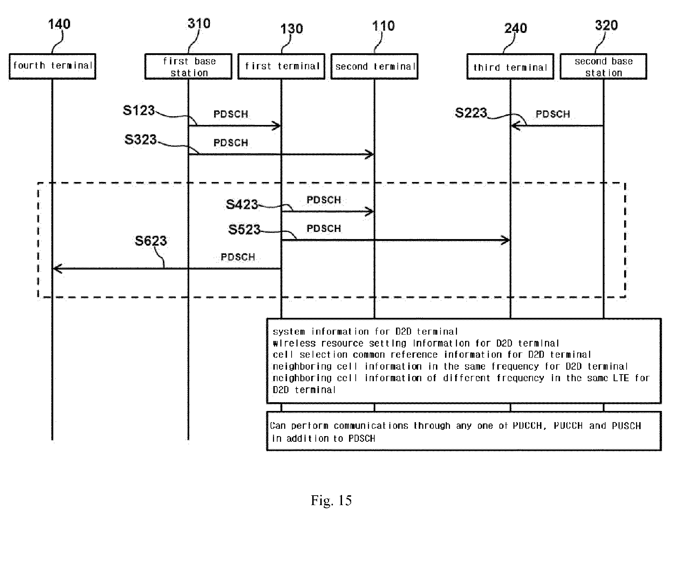

FIG. 15 is a flowchart illustrating still another method for transmitting data using PDSCH through a first terminal 130 of FIG. 1. Here, the first terminal 130 may transmit D2D data through any one of a PDCCH, a PUCCH and a PUSCH in addition to a PDSCH, and information included in the PDSCH, PDCCH, PUCCH or PUSCH may include at least one of information that is the same as the contents of the PDSCH transmitted from the first base station 310 to the first terminal 130, system information for a D2D terminal, wireless resource setting information for the D2D terminal, cell selection common reference information for the D2D terminal, neighboring cell information in the same frequency for the D2D terminal, and neighboring cell information of the other frequency in the same LTE for the D2D terminal.

Base station PDSCH information S123 is broadcasting information that is transmitted from the first base station 310 to the first terminal 130, and base station PDSCH information S323 is broadcasting information that is transmitted to the second terminal 110. The base station PDSCH information S123 and the base station PDSCH information S323 may be information that includes the same contents and is typically used as the broadcasting information in the LTE base station.

On the other hand, the base station PDSCH information S223 is broadcasting information that is transmitted from the second base station 320 to the third terminal 240, and includes information which is different from the base station PDSCH information S123 that is transmitted from the first base station 310.

D2D PDSCH information S423 is broadcasting information that is transmitted from the first terminal 130 to the second terminal 110, and further includes information that is related to the D2D in addition to the contents that are typically used in the LTE base station. D2D PDSCH information S523 is broadcasting information that is transmitted from the first terminal 130 to the third terminal 240, and includes the same contents as the D2D PDSCH information S423. Further, D2D PBCH information S623 is broadcasting information that is transmitted from the first terminal 130 to the fourth terminal 140, and includes the same contents as the D2D PDSCH information S423.

As described above, the system and method for transmitting broadcasting data on LTE D2D communications in accordance with the present invention have the advantages that the D2D data can be transmitted using the broadcasting channel of the LTE, and the existing channel of the LTE can be efficiently used without the necessity of providing a separate channel for the D2D communications.

It will be understood that a certain specific order of steps in optionally proposed processes or a layer structure are examples of exemplary accesses. It will be understood that based on design priorities, the specific order of the steps in the processes or the layer structure may be rearranged within the scope of the present invention.

The appended method claims provide elements of various steps in an exemplary order, but do not mean that they are not limited to the proposed specific order or layer structure.

Here, steps of the methods or algorithms described in relation to the embodiments presented herein may be implemented directly by hardware, a software module executed by a processor, or a combination thereof.

The software module may reside in a RAM memory, a flash memory, a ROM memory, an EPROM memory, an EEPROM memory, registers, a hard disk, a movable disk, a CD-ROM, or a certain type of storage medium that is technically known.

The exemplary storage medium may be connected to a machine, such as a computer or a processor, (for convenience, it may be called a processor), and the resultant processor may read information (e.g., software commands) from the storage medium and write information in the storage medium. Alternatively, the storage medium may be integrated into a processor.

Further, in some aspects, the processor and the storage medium may be included in ASIC. The ASIC may be included in a user terminal device. Alternatively, the process and the storage medium may be included in the user terminal device as individual components.

Additionally, in some aspects, steps of the methods or algorithms and/or operations may reside as one of codes and/or commands on a machine-readable medium and/or a computer-readable medium, or a certain combination or set thereof.

In one or more aspects, the explained functions may be implemented by hardware, software, firmware, or a certain combination thereof. In the case of implementation by software, the functions may be stored or transmitted as one or more commands or codes on the computer-readable medium.

The computer-readable medium may include computer storage medium and every communication medium including a certain medium that facilitates movement of a computer program from one place to another place. Explanation of the proposed embodiments is provided so that those of an ordinary skill in the art to which the present invention pertains can use or embody the present invention.

It will be understood by those of ordinary skill in the art to which the present invention pertains that various modifications and changes in form and detail may be made therein without departing from the spirit and scope of the invention.

Accordingly, the present invention is not limited to the embodiments proposed herein, but will be construed that such modifications and changes fall within the scope of the present invention.

## Claims

1. A system for transmitting broadcasting data on LTE D2D communications, comprising:
a first base station configured to wirelessly provide a mobile communication service; and
a first terminal configured to receive the mobile communication service from the first base station,
wherein the first terminal performs D2D communications with at least one of a second terminal configured to wirelessly receive the mobile communication service from the first base station, a third terminal configured to receive the mobile communication service from a second base station that wirelessly provides a mobile communication service in a different area from the first base station, and a fourth terminal which does not receive the mobile communication service.

2. The system for transmitting broadcasting data according to claim 1, wherein the first base station uses any one of allocation of a new frequency, additional allocation of a sub-channel in the same frequency, and sharing of the same channel in the same frequency so that the first terminal can perform the D2D communication, a synchronization signal for the D2D communications may use any one of providing through an uplink channel, providing through a broadcasting channel, and simultaneous providing through both the uplink and broadcasting channels, and as a technique for preventing interference between a wireless channel of the first base station and a wireless channel of the D2D communications performed by the first terminal, at least one of a channel allocation technique, a channel management technique, and a duplexing method is used.

3. The system for transmitting broadcasting data according to claim 1, wherein the first terminal transmits D2D data through a PBCH, and information included in the PBCH includes at least one of information that is the same as the contents of the PBCH transmitted from the first base station to the first terminal, a channel bandwidth of a broadcasting signal for the D2D, a detailed structure of a PHICH channel for the D2D, an SFN for the D2D, antenna use information for the D2D, information that limits transmission power of the terminal used for the D2D, and information of the D2D that is used in a neighboring base station.

4. The system for transmitting broadcasting data according to claim 3, wherein the information of the D2D includes at least one of a frequency that a D2D terminal uses, a bandwidth, a used base station, and the number of terminals that simultaneously perform D2D communications with the D2D terminal.

5. The system for transmitting broadcasting data according to claim 1, wherein the first terminal transmits D2D data through a PDSCH, and information included in the PDSCH includes at least one of information that is the same as the contents of the PDSCH transmitted from the first base station to the first terminal, system information for a D2D terminal, wireless resource setting information for the D2D terminal, cell selection common reference information for the D2D terminal, neighboring cell information in the same frequency for the D2D terminal, and neighboring cell information of the other frequency in the same LTE for the D2D terminal.

6. The system for transmitting broadcasting data according to claim 1, wherein the first terminal performs a D2D frequency request operation that requests a common frequency for the D2D communications with the second terminal from the first base station, a D2D frequency allocation operation that allocates the common frequency in response to the D2D frequency request operation, and a D2D frequency sharing operation that transmits the result of the D2D frequency allocation operation to the second terminal.

7. The system for transmitting broadcasting data according to claim 6, wherein the first terminal controls an RF switch to make transmission timing and reception timing with the second terminal be opposite to each other.

8. The system for transmitting broadcasting data according to claim 1, wherein the first terminal performs a D2D frequency request operation that requests a common frequency for the D2D communications with the third terminal having a different service provider from the first base station, a D2D frequency allocation request operation that requests allocation of the D2D frequency from the second base station according to the request of the D2D frequency request operation, a D2D frequency allocation response operation that responds to the D2D frequency allocation in response to the D2D frequency allocation request operation, and a D2D frequency sharing operation that transmits the result of the D2D frequency allocation response operation to the third terminal.

9. The system for transmitting broadcasting data according to claim 8, wherein the first terminal controls an RF switch to make transmission timing and reception timing with the third terminal be opposite to each other.

10. The system for transmitting broadcasting data according to claim 1, wherein the first terminal transmits AMC information to the second terminal using at least one of an AMC method that is used in the first base station, TTI bundling, repeated transmission, code diffusion, RLC segmentation, low coding, low-order modulation method, power increase, and power density increase.

11. The system for transmitting broadcasting data according to claim 1, wherein the second terminal transmits results of CNR, SNR, MER, and HARQ on a reception side for setting AMC to the first terminal using at least one of the same transmission method in the first base station, TTI bundling, repeated transmission, code diffusion, RLC segmentation, low coding, low-order modulation method, power increase, and power density increase.

12. The system for transmitting broadcasting data according to claim 1, wherein the first terminal performs a D2D frequency request operation that requests a common frequency for the D2D communications with the third terminal having a different service provider and a different use frequency from the first base station, a D2D frequency allocation request operation that requests allocation of the D2D frequency from the second base station according to the request of the D2D frequency request operation, a D2D frequency allocation response operation that responds to the D2D frequency allocation in response to the D2D frequency allocation request operation, and a D2D frequency sharing operation that transmits the result of the D2D frequency allocation response operation to the third terminal.

13. The system for transmitting broadcasting data according to claim 12, wherein the first terminal controls an RF switch to make transmission timing and reception timing with the third terminal be opposite to each other.

14. The system for transmitting broadcasting data according to claim 1, wherein the first terminal transmits a discovery signal for discovering a D2D terminal to the second terminal that performs the D2D communication with the first terminal when at least 0.001 msec elapses after receiving a synchronization signal from the first base station.

15. The system for transmitting broadcasting data according to claim 1, wherein if a synchronization signal transmitted from the first base station and a synchronization signal transmitted from the first terminal are simultaneously received, the second terminal selects and uses the synchronization signal transmitted from the base station.

16. The system for transmitting broadcasting data according to claim 1, wherein the first terminal itself transmits a synchronization signal that is transmitted from the first base station if the synchronization signal is received with a level that is equal to or lower than a reference value that is in a range of +1 dB to +30 dB from a minimum reception level, and interrupts the transmission of the synchronization signal that is transmitted by the first terminal itself if the synchronization signal is received with a level that is equal to or higher than a specific value that is in the range of +1 dB to +30 dB from the minimum reception level.

17. The system for transmitting broadcasting data according to claim 1, wherein the first terminal transmits a synchronization signal using at least one of temporal arrangement, frequency arrangement, and a kind of pseudo noise, which is different from that of a synchronization signal that is transmitted from the first base station.

18. The system for transmitting broadcasting data according to claim 1, wherein the first terminal transmits a synchronization signal arranged to time and frequency to the second terminal with repetition at least once to 16 times.

19. The system for transmitting broadcasting data according to claim 1, wherein the first terminal transmits at least one of a first terminal ID, a second terminal ID, broadcast information, multicast information, and specific information of the first terminal, simultaneously with a discovery signal that is transmitted from the first terminal.

20. The system for transmitting broadcasting data according to claim 1, wherein the first terminal transmits D2D data through any one of a PDCCH and a PDSCH in addition to a PBCH, and information included in the PBCH, PDCCH, and PDSCH includes at least one of information that is the same as the contents of the PBCH transmitted from the first base station to the first terminal, a channel bandwidth of a broadcasting signal for the D2D, a detailed structure of a PHICH channel for the D2D, an SFN for the D2D, antenna use information for the D2D, information that limits transmission power of the terminal used for the D2D, and information of the D2D that is used in a neighboring base station.

21. The system for transmitting broadcasting data according to claim 20, wherein the information of the D2D includes at least one of a frequency that a D2D terminal uses, a bandwidth, a used base station, and the number of terminals that simultaneously perform D2D communications with the D2D terminal.

22. The system for transmitting broadcasting data according to claim 1, wherein the first terminal transmits D2D data through any one of a PDCCH, a PUCCH and a PUSCH in addition to a PDSCH, and information included in the PDSCH, PDCCH, PUCCH or PUSCH includes at least one of information that is the same as the contents of the PDSCH transmitted from the first base station to the first terminal, system information for a D2D terminal, wireless resource setting information for the D2D terminal, cell selection common reference information for the D2D terminal, neighboring cell information in the same frequency for the D2D terminal, and neighboring cell information of the other frequency in the same LTE for the D2D terminal.
